# EUROPEAN PATENT APPLICATION

(11) **EP 4 215 951 A1**
(43) Date of publication of application: **26.07.2023**
(21) Application number: 23152355.6
(22) Date of filing: 19.01.2023
(51) Int. Cl.: G01V 3/08, G01V 3/15

(54) **LOCATING DEVICE AND SYSTEM FOR DETECTING HIDDEN OBJECTS IN BUILDING CONSTRUCTIONS**

(30) Priority: 21.01.2022 DK PA202270027
(71) Applicant: PoleDetect Holding ApS, 7000 Fredericia (DK)
(72) Inventor: JAKOBSEN, Poul, 8800 Viborg (DK)
(74) Representative: COPA Copenhagen Patents

(57) **Abstract**

The present invention relates to a locating device (10) for detecting hidden objects in building constructions.

The locating device comprises at least three magnetic field sensors (20) arranged in a single plane and arranged relative to a reference point.

Each sensor is configured for detecting a strength of a magnetic field (40) and outputting a senor signal indicating the strength of the detected magnetic field.

The locating device comprises a controller (50) configured for receiving the sensor signals and configured for generating one or more vectors indicating the strength of the detected magnetic field and a direction towards a stronger part of the magnetic field.

The locating device may furthermore comprise a user interface (60) configured for receiving the one or more controller signals and for guiding a user to determining a position of a magnetic field source (102) generating the detected magnetic field.

The position of the magnetic field source can be located in three dimensions relative to the reference point.

The present invention furthermore relates to a locating system (100) comprising the locating device and a permanent magnet and a method of detecting hidden objects in building constructions.

## Description

### Field of the Invention

The present invention relates to a locating device for detecting hidden objects in building constructions.

The locating device comprises at least three magnetic field sensors arranged in a single plane and arranged relative to a reference point.

Each sensor is configured for detecting a strength of a magnetic field and outputting a sensor signal indicating the strength of the detected magnetic field.

The locating device comprises a controller configured for receiving the sensor signals and configured for generating one or more vectors indicating the strength of the detected magnetic field and a direction towards a stronger part of the magnetic field.

The locating device may furthermore comprise a user interface configured for receiving the one or more controller signals and for guiding a user to determining a position of a magnetic field source generating the detected magnetic field.

The position of the magnetic field source can be located in three dimensions relative to the reference point.

The present invention furthermore relates to a locating system comprising the locating device and a permanent magnet and a method of detecting hidden objects in building constructions.

### Background of the Invention

In the construction phase of building houses and offices, installation's work such as cabling, piping and ventilation is performed at an early stage. In subsequent phases these installations are covered e.g. by plating the ceilings, floors and walls with gypsum plates, wall paper, plaster or concrete or covered by use of other building materials and techniques.

In the process of finalizing the construction work, some of the covered installations need to be located and connected via electrical junction boxes, wall and ceiling boxes with stick pockets, switches, outlets and other connections.

Also, in existing buildings, localizing hidden installations may be needed to avoid damaging existing installations or to avoid damaging tools such as drills by collisions between existing installations and the tools. Hidden installations, such as reinforcement elements in existing walls may also need to be located, in case of rearrangement or modification of existing buildings.

When locating hidden installations an accurate location in the order of 1 mm is required to prevent re-work afterwards of non-usable or non-coverable bore holes, an accuracy of 0.5 mm or even lower may be preferred. The hidden installations or object to be localized may be a cable, an installation pipe or tube, or the exact location of a wall perforation amongst others.

Today, the process of retrieving the exact position of hidden and covered boxes, cables, piping, etc is solved in a lot of different ways. Commonly used solutions are to rely on construction drawings and locating the covered installations by measurements from a fixed point or by tapping on the cover and listening to changes in the sound of tapping. This, however, may be time consuming processes and vulnerable for human errors.

An alternative method is to use two permanent magnets; One magnet arranged on/in the hidden installation and the other magnet is arranged on the other side of the cover e.g. on the plated wall/ceiling and moved until the magnetic field of the first magnet is detected with the second magnet. However, friction between the second magnet and the cover material may easily generate an offset resulting in an offset localized point. Another drawback of this method is that it is limited to be used for small thicknesses of the cover as the magnetic force between the two opposing magnets reduces significantly as a function of increased distance and across heavily plated walls.

U.S. Pat. No. 6,708,421 discloses one example of a device for locating a junction box behind a wall. The device includes a first magnet positioned within the box and a second magnet positioned on the outer surface of the wall for locating the magnet or magnets located within the box. However, when installing sheet material on walls, the sheet material is never precisely parallel with the junction box face until the hole for the box is cut. This causes a separation between the magnet in the box and the inner surface of the sheet material which can be a quarter inch or more. As magnetic attraction decreases exponentially with distance, this small space can result in unsatisfactory attraction on the external magnet.

Also, U.S. Pat. No. 6,452,097 discloses a system for locating an outlet box behind dry-wall. A magnet is positioned within the box via a plate, a wire, or magnet mounting tape. A magnet sensing device is used on the outer surface of the wall for locating the box. However, the magnet must be centrally located within the box in order for the sensing device to locate the magnet. In addition, the same drawbacks concerning separation between the magnet in the box and the sheet material seen for U.S. Pat. No. 6,708,421 are also present for this system. Even further, the magnetic tape or magnets on a wire cannot protect the contents of the junction box from damage in the cutting process. Additionally, if the magnet is mounted flush with a plate in the box, it can be difficult to remove as there is no protrusion to grasp after cutting the hole.

Several systems for locating metal or magnetic objects in the ground are known. Generally, these systems comprise GPS positioning devices, which are not suitable for detecting a position of hidden objects in building constructions, such as in wall and ceilings. Furthermore, the precision of systems is typically not of an accuracy suitable for obtaining the exact position of hidden objects in walls or ceilings.

Therefore, a need exists for a method for locating a junction box in a simple, accurate, and efficient manner.

### Object of the Invention

One objective of the present disclosure is to achieve a device for locating hidden objects in building constructions with high accuracy. A further objective is to achieve a device for detecting a position of hidden objects in building constructions.

One objective is to locate a hidden object in a (X,Y,Z) position relative the device.

Further objectives include achieving a handheld device and a device with user guidance for locating the hidden objects.

### Description of the Invention

One objective of the disclosure is achieved by a locating device for detecting hidden objects in building constructions.

The locating device comprises at least three magnetic field sensors. The sensors may be arranged in a single plane e.g. an (X,Y) plane in a fixed pattern and may be arranged relative to a reference point.
I.e. the device may comprise four or more magnetic field sensors.

Each sensor is configured for detecting a strength of a magnetic field and outputting a sensor signal indicating the strength of the detected magnetic field.

The locating device comprises a controller configured for receiving the sensor signals.

The controller may furthermore be configured for generating one or more vectors indicating the strength of the detected magnetic field and a direction towards a stronger part of the magnetic field. The one or more vectors can be generated as a function of the received sensor signals.

The controller may furthermore be configured for outputting one or more controller signals for the one or more vectors.

The locating device may furthermore comprise a user interface configured for receiving the one or more controller signals and for outputting direction guidance based on the received controller signals for guiding a user to determining a position of a magnetic field source generating the detected magnetic field.

The position of the magnetic field source can be represented by X-, Y- and Z-coordinates relative to the reference point.

The locating device is suitable for detecting a position of hidden objects in building constructions such as wall and ceilings.

In one aspect, the three magnetic field sensors are arranged substantially perpendicular to the (X,Y) plane for detecting the strength of the magnetic field perpendicular to the (X,Y) plane.

The locating device is adapted to be operated in combination with a magnetic field source either comprised in the hidden object to be detected or with a magnetic field source arranged in relation to the hidden object to be detected e.g. behind a hidden object shielding or altering the magnetic field generated by the source.

In one aspect, based on the three sensor signals and their respective positions relative to each other, associated Gaussian representations of the detected magnetic field may be calculated. By superimposing the calculated Gaussian representations, the one or more vectors may be generated.

One effect of the locating device is that the magnetic field source can be located in three dimensions i.e. a depth of hidden objects can be determined.

The signals may be used to find the zero-point or centre point for the magnet field source in the (X,Y) plane and to find the distance to the magnet field source in the Z-direction i.e. perpendicular to the (X,Y) plane.

The depth may be determined from the measured amplitudes of the magnetic field. The device may be calibrated according to a specific magnetic field source such that a given measured value corresponds to a distance, here depth e.g. in millimetres (mm).

Determining the depth of the source generating the magnetic field is beneficial when building relatively thin walls e.g. 10 cm thick using plasterboards on each side and where sockets, switch, etc. are needed on both sides of the wall. In this situation you can only mount the wall sockets in positions offset to each other, as two wall sockets mounted back-to-back is too thick to fit between the plates forming the wall sides. In this situation it is important to find the right socket to be accessed from a given wall side. This may be achieved by for example arranging a magnet in the socket in a position close to the plasterboard to be drilled.

A further effect of the locating device is that hidden objects may be detected if the hidden object alters the magnetic field generated by the source in a direction between a magnet and the locating device. E.g. as a consequence of being made of magnetizable material. This could for example include steel reinforcement elements, which can be detected and located, thereby drilling into such elements may be prevented. This may be beneficial for preventing damaging drills by hitting the elements, or to prevent drilling non-usable holes due to the existence of hidden objects, which should be maintained.

In addition, hidden objects may be detected by arranging magnetic field sources connected to the hidden objects e.g. cables located and hidden between ceiling plasterboards and insulation material.

The locating device may be used for a number of applications such as:
- to detect hidden installations like wall, ceiling, roof, floor electrical junction boxes,
- to map routing installation tubes in concrete casted floors, walls, ceilings,
- to detect single cables e.g. for installation of light spots, where a depth position is beneficial for preventing damage of the light sockets while drilling or cutting,
- to map routing of floor heating hoses where the depth position is beneficial for determine the drilling debt, to prevent damaging the hoses,
- to locate exact position of wall, ceiling, floor penetration, and/or
- in general, to locate pipes, cable etc. occurring in building constructions e.g. for gas, ventilation, water etc.

The depth and precision of the locating device will depend on the specifications of the magnetic field sensors and the magnets to used.

In one aspect, the locating device may be used to detect magnetic field sources at a depth of up to 70mm with a precision of 0.2 mm or lower.

In one aspect, the locating device may be used to detect magnetic field sources at a depth of up to 100mm, 120mm or even 150mm with a precision of 0.2mm or lower.

This depth may thus depend on the magnetic field of the source, the sensitivity of the sensors and the material through which the magnetic field is to be detected. Thus, the above-mentioned depths are verified depts that can be detected and depths typically relevant to be detected in building constructions such as wall and ceilings.

In one aspect the locating device may be used in combination with a pre-installed magnet field source in a fixed position with either the south or north pole to be detected.

In one aspect the locating device may be used in combination with a pulled or pushed magnet, preferably a radial magnet following a tube or hose. The locating device may be used to continuously locate or map the tube or hose.

The magnetic field source may be a permanent magnet.

The multiple magnetic field sensors may preferably be of the same type or sensors which strength measurements are comparable for the direction of and the strength of the magnetic field to be calculated using an average or a calibrated average of the signals from the sensors.

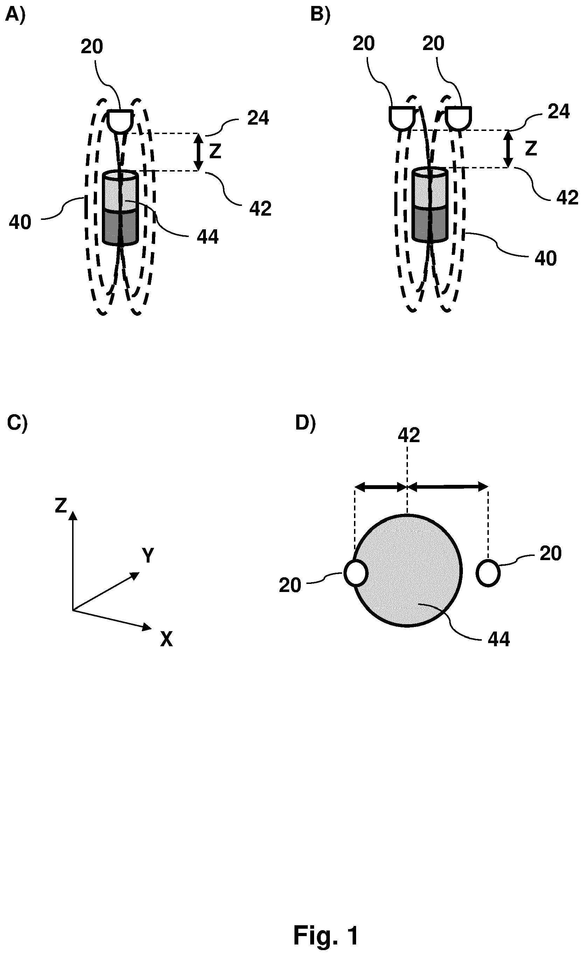

A locating device may be achieved with a single or two magnetic field sensors. Such a locating device may likewise be able to establish a (X,Y,Z) position of a magnetic field source. However, using three or more sensors achieves a more robust sensor where the user may be guided directly to the position of the magnetic field source, where the locating device with one or two sensors needs the user or incorporated means for comparing a current measurement with a previous measurement to establish if the device is moved in direction of a stronger or weaker magnetic field. I.e. the trade-off of using only one or two sensors is that the user has to probe the area, where the magnetic field is measured and search for the position of the maximum strength by moving the device and to compare the value of the measured magnetic field in at least two different points, whereas the device according to the invention with three or more sensors can guide the user in the direction of the position of the maximum field strength. The working concept using a single or two sensors is further elaborated in figure 1 in the detailed description.

In one embodiment of the locating device, at least three of the magnetic field sensors are Hall sensors.

In one aspect, the Hall sensors may be analogue Hall sensors.

Hall sensors are commonly used magnetic field sensors and are commercially available in large numbers, in many grades or qualities and cost-prices typically reflecting the quality and/or accuracy. Thus, a low-cost locating device may be achieved using Hall sensors. In addition, the device may be adapted by the choice of Hall sensors to specific uses e.g. the working depth and the accuracy to be achieved at that working depth. Here working depth refers to the distance between the magnet generating the field to be detected and the locating device.

In one embodiment, the locating device is comprised in a handheld scanning device configured to be moved along a construction surface substantially parallel to the (X,Y) plane of at least three of the magnetic field sensors.

In use, the (X,Y) plane spanned by the sensors should preferably be parallel to the operating plane i.e. the plane given by the surface of the construction element, such that the locating device may be used in any rotational orientation of the magnetic field sensors without performing continuous calibration of the sensors. Here, rotational orientation refers to an angular rotation of the sensors in the plane of the construction surface or the plane spanned by the sensors, which planes preferably should be aligned parallel to each other during use of the locating device.

Constructing the locating device as a handheld device may be particularly beneficial for use in the construction industry, as it may be easily used on walls, ceilings and floors.

In a further embodiment, the handheld scanning device comprises a scanner surface arranged substantially parallel to the (X,Y) plane of the three magnetic field sensors. The scanner surface may be adapted to be moved along the construction surface.

In one embodiment, the locating device may comprise marking device (90) configured to be moveable in at least one direction being perpendicular to the (X,Y) plane of at least three of the magnetic field sensors (22) for providing a mark on the construction surface for indicating the (X,Y) position of the magnetic field source.

The marking device may comprise a spike being able to provide a mechanical mark in plaster materials or other typical construction materials.

In one aspect, the marking device may be a spring activated pin.

The marking device may be mechanical guided in at least the direction being perpendicular to the (X,Y) plane of the magnetic field sensors in such a way that slack in the X,Y plane is avoided resulting in improved accuracy of setting the mark and hence in the location of the magnetic field source.

In one aspect, the marking device may be a tip arranged in a centre point in the (X,Y) plane spanned by three or more sensors.

The ability to provide a mark on the construction surface with the device may improve the useability of the device by omitting the need for the user of the device to handle an external marker with the risk of setting the mark in a wrong point resulting in inaccurate location of the magnetic field source.

One objective of the disclosure is achieved by a locating system comprising the locating device according to anyone of the disclosed embodiments, and a permanent magnet. The permanent magnet may be adapted to be arranged in or on an installation object to be located.

The locating device is adapted to be used for detecting a position of a magnet field source. The permanent magnet may therefore beneficially be arranged centred in an installation box or clipped onto a cable or pipe, such that the magnet pole is arranged perpendicular to the construction surface. Thereby, the location device can be operated in a plane perpendicular to the magnet pole. By operating the locating device in a parallel plane over the plating, the centre point of and the distance to the magnet can be determined with high accuracy.

The locating device can be operated by only using the magnitude of the measured value and hence the locating device can be operated independently of the polarity (north/south) of the magnet.

In one embodiment, the locating system comprises a holder adapted for holding the permanent magnet.

One effect of the holder may be that the magnet can be arranged in a specific place in an installation box or on a pipe or cable. This may ensure that the permanent magnet is arranged in an optimal direction and in an optimal place each time the system is used. This may again provide for securing a high accuracy of the system.

In one aspect, the holder may be adapted to be temporary mounted in the installation object, such that it may be reused.

One objective of the disclosure is achieved by a use of the locating device according to anyone of the disclosed embodiments or the use of the locating system according to anyone of the disclosed embodiments for detecting existing steel elements located inside building constructions.

The steel elements may be reinforcements built into the constructions/construction elements.

The steel elements may shield a part of a generated magnetic field in the direction between the locating device and the source of the magnetic field. As the magnetic fields can be represented as Gaussian representations or comparable curves, a resulting superimposed curve from three or more sensors may present a dampened signal when a steel element is present between the device and the magnetic field source, which may be used for locating such existing elements hidden inside e.g. a wall.

This use may be beneficial for preventing damaging drills by hitting the elements, or to prevent drilling non-usable holes due to the existence of hidden objects, which should be maintained.

Hence, detecting existing shielding elements, comparable thickness measurements of the construction element may be beneficial. E.g. for use on a wall element, one measurement of the wall's thickness in one point may be compared to another measurement in another point for comparison. Alternatively, a manually conducted measurement of the wall's thickness may be compared with the measured and calculated depth achieved by use of the locating device.

One objective of the disclosure is achieved by a method of detecting hidden objects in building constructions. The method comprises acts of:
- providing at least three magnetic field sensors arranged in a fixed pattern in an (X,Y) plane with a reference point,
- detecting a strength of a magnetic field with each of the three sensors,
- outputting sensor signals indicating the strength of the detected magnetic field,
- receiving, in a controller, the sensor signals,
- generating one or more vectors indicating the strength of the detected magnetic field and a direction towards a stronger part of the magnetic field, wherein the one or more vectors are generated as a function of the received sensor signals, and
- outputting one or more controller signals for the one or more vectors for guiding a user to determining a position of a magnetic field source generating the detected magnetic field. The position may be represented by X-, Y- and Z-coordinates relative to the reference point.

The method is suitable for detecting a position of hidden objects in building constructions such as wall and ceilings.

In one aspect, the three magnetic field sensors are arranged substantially perpendicular to the (X,Y) plane for detecting the strength of the magnetic field perpendicular to the (X,Y) plane.

The effects and benefits of this method are in line with those discussed for the disclosed embodiments of the locating device e.g.:
- locating a magnetic field source in three dimensions i.e. determining depth and zero-point or centre point for the magnet field source in the (X,Y) plane of hidden objects,
- locating hidden magnetizable objects arranged in a position between a magnet and the locating device due to a resulting shielding effect from the objects of the magnetic field generated by the magnetic field source,
- detecting hidden installations like wall, ceiling, roof, floor electrical junction boxes,
- mapping routing installation tubes in concrete casted floors, walls, ceilings,
- detecting single cables e.g. for installation of light spots, where a depth position is beneficial for preventing damage of the light sockets while drilling or cutting,
- mapping routing of floor heating hoses where the depth position is beneficial for determine the drilling debt, to prevent damaging the hoses,
- locating exact position of wall, ceiling, floor penetration, and/or
- in general, locating pipes, cable etc. occurring in building constructions e.g. for gas, ventilation, water etc.

In one embodiment, the method comprises acts of providing a permanent magnet and of arranging the permanent magnet in or on an installation object to be localized. The permanent magnet may be arranged with the magnet pole substantially perpendicular to the (X,Y) plane of the sensors when in use.

The effects and benefits of this method are in line with those discussed for the disclosed embodiments of the locating system. These are with intent not repeated here.

### Description of the Drawing

The disclosure will be described in the following with reference to the accompanying figures, in which:
Figs. 1 and 2 illustrate the concept used for the locating device.
Fig. 3 illustrates one embodiment of the locating system.
Fig. 4 illustrates one embodiment of the locating device as a handheld scanning device.
Fig. 5 illustrates one use of an embodiment of the locating system for detecting hidden steel elements.
Fig 6 illustrates one embodiment of the method of detecting hidden objects in building constructions.

### Detailed Description of the Invention

In the different figures identical or corresponding elements will be denoted with the same reference numeral. Accordingly, each item will not be described in connection with each figure.

| No | Item |
|---|---|
| 10 | locating device |
| 12 | handheld scanning device |
| 14 | scanner surface |
| 20 | magnetic field sensor |
| 22 | sensor signal |
| 24 | reference point |
| 30 | (X,Y) plane |
| 40 | magnetic field strength |
| 42 | magnetic field source position |
| 44 | magnetic field source |
| 50 | controller |
| 52 | vector |
| 56 | controller signal |
| 60 | user interface |
| 80 | construction surface |
| 90 | marking device |
| 100 | locating system |
| 102 | permanent magnet |
| 104 | holder |
| 200 | method |
| 210 | providing |
| 212 | detecting |
| 214 | outputting |
| 216 | receiving |
| 218 | generating |
| 220 | arranging |

The term arranged on includes indirectly or directly arranged on. Likewise, connected to includes indirectly or directly connected to.

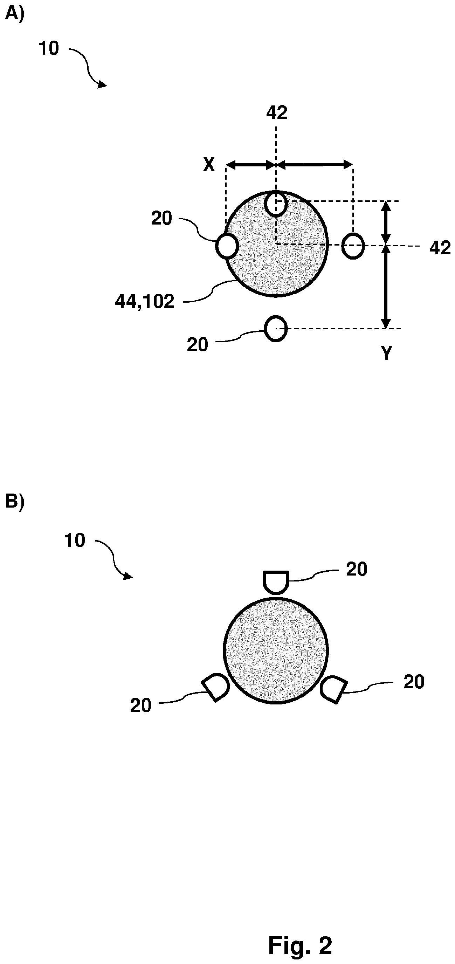

Figures 1 and 2 illustrate the concept used for the locating device. The strength of a magnet field 40 is measured by a magnetic field sensor 20 e.g. an analogue sensor, which sensor gives a sensor signal indicating the strength of the magnetic field. The magnetic field 40 is generated by a magnetic field source 44, which may be a permanent magnet.

In Fig. 1A the concept is illustrated for a single magnetic field sensor 20. The measured strength of the magnetic field is converted into a distance based on the sensor signal. By using one sensor it is possible to calculate a vertical distance or a Z-position of the sensor relative to the magnetic field source 44 when the sensor is aligned correct in the vertical position. This vertical distance or Z-position cannot be estimated or calculated simply by visual alignment when the magnetic field source 44 is hidden in a or behind e.g. building constructions such as walls, roofs or floors.

In Fig. 1B the concept is illustrated for two magnetic field sensors. By using two sensors it is also possible to measure a horizontal distance i.e. X- or a Y-position of the sensors relative to the magnetic field source 44, when the sensors are aligned in the vertical position. The horizontal distance may be expressed as a dislocation of the centre point between the sensors relative to the position (42) of the magnetic field source, as illustrated in figure 1D. See figure 1C for the X, Y, Z-coordinate system applied for the illustrated concept.

When using two magnetic field sensors of the same type or sensors which measurements are comparable, the Z-position may be calculated by using the average or a calibrated average of the two signals from the two sensors 20

When used for location purpose, it is important to use the sensors mounted in a fixed pattern relative to a defined reference point and operation plane e.g. a (X,Y) plane such that the average or calibrated average of the detected field strength can be continuously determined for different positions of the sensors when moved in operation plane. The operation plane should preferably be perpendicular to the pole of the magnetic field source 44. And the sensors should preferably be arranged in parallel to the operation plane such that only a pre-calibration of the sensors may be necessary.

For the location in the horizontal position i.e. the X- or Y-direction, if the sensors are calibrated and aligned correctly in the vertical position, the measured signals can be balanced out to zero, when the centre of the magnetic field source 44 is positioned between the two sensors. When the sensors are moved in e.g. +X or -X direction the difference in the signal levels may be used to calculate a dislocation which can be generated into a distance vector. This vector may be used to guide a user of the locating device via a user interface i.e. via a tactile or visual output.

By using three or four sensors as illustrated in figure 2 it is possible to measure the X-, Y- and Z-position.

If the sensors, as for the concept with two sensors, are calibrated and aligned correctly in the vertical plane, the measured signals can be balanced out to zero, when the centre of the magnetic field source 44 is positioned between the three or four sensors. When the sensors are moved in +X/-X- or +Y/-Y-direction the difference in the signal levels may be used to calculate a dislocation in both X- and Y- direction. This dislocation can be generated into a distance vector. This vector may be used to guide a user of the locating device via a user interface i.e. via a tactile or visual output.

The embodiments illustrated in figures 2A and 2B with respectively four and three magnetic field sensors 20 may be used for the disclosed locating device 10. The magnetic field sensors may preferably be arranged in a symmetric pattern in a plane parallel to the operation plane of the locating device e.g. in the (X,Y)-plane as illustrated in figure 1.

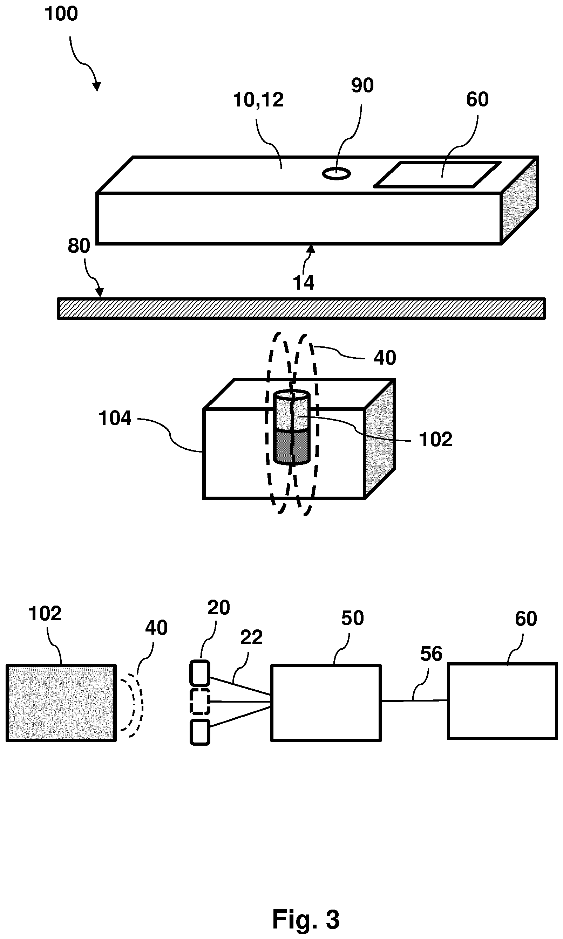

Figure 3 illustrates one embodiment on the locating system 100 comprising one embodiment of the locating device 10 in accordance with any of the disclosed embodiments of the locating device. Here the locating device 10 is illustrated as having a marking device (90).

The system furthermore comprises a permanent magnet 102 arranged in an installation object e.g. a holder 104 to be located behind a construction element, illustrated by the hatched obstacle between the locating device 10 and the permanent magnet 102.

The locating device 10 is illustrated as a handheld scanning device 12 comprising a scanner surface 14 arranged substantially parallel to the operation plane i.e. the surface of the construction element 80. The magnetic field sensors 22 may be aligned in a plane parallel to the scanner surface for a balanced output of the sensors.

The scanner surface 14 may be adapted to be moved along the construction surface 80.

The indicated marking device 90 may be configured for providing a mark on the construction surface 80 for indicating the (X,Y) position of the magnetic field source i.e. the permanent magnet 102 in the illustrated embodiment.

The permanent magnet should preferably be arranged with the magnetic field perpendicular to the plane spanned by the sensors in the locating device when in use.

In use, the plane spanned by the sensors should preferably be parallel to the operating plane i.e. the plane given by the surface 80 of the construction element and the permanent magnet arranged with the poles substantially perpendicular to these planes.

In figure 3 one embodiment of the locating device with three sensors is illustrated with the communicated signals indicated. The sensor signals 22 from the magnetic field sensors 20 are communicated to the controller 50. The controller outputs one or more controller signals 56 comprising information of the vector 52 indicating the strength of the magnetic field and the direction of a stronger magnetic field to a user interface 60. The user interface may use the received controller signals 56 to guide the user of the locating device 10 to the (X,Y) position of the magnetic field source by use of a tactile and/or visual output.

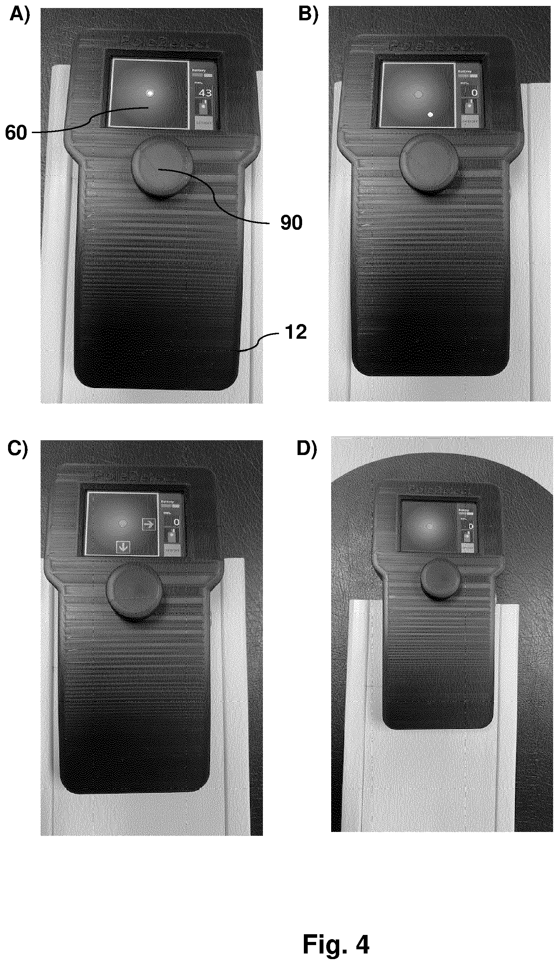

The user interface may be graphical user interface (GUI) as illustrated in figure 4.

Figure 4 illustrates one embodiment of the locating device as a handheld scanning device 12. The embodiment comprises an activation button for a marking device 90 configured for providing a mark on a construction surface for indicating the (X,Y) position of the magnetic field source.

In figure 4 one embodiment of the handheld scanning device 12 is illustrated. The handheld scanner comprises a display as the user interface 60.

Figure 4A illustrates a case where the (X,Y) position of the magnetic field source is found i.e. the position where the strongest magnetic field is detected with the locating device. This is indicated by a green circle representing the position of the handheld scanning device and the white circle representing the calculated position 42 of the magnetic field source. The calculated Z-value is indicated by the numerical value of '43' seen on the right-hand side of the display. This value may for example be given as a depth in mm. The locating device may be calibrated before use to the specific permanent magnet, which position if to be determined.

Figure 4B Illustrates a case where the (X,Y) position of the position of the magnetic field source is calculated to be in the vicinity of the locating device. This is indicated by a red circle representing the position of the handheld scanning device and the white circle representing the calculated position 42 of the magnetic field source. This illustrated case may arise, when a sufficiently strong magnetic field is measured by multiple magnetic field sensors such that the position of the magnetic field source can be calculated with sufficient accuracy.

Figure 4C Illustrates a case where the (X,Y) position of the position of the magnetic field source can be calculated but in a position further away than that of the case illustrated in figure 4B but where the measured magnetic field is sufficient to calculate a direction vector. This is indicated by a red circle representing the position of the handheld scanning device and arrows pointing in the direction of the position of the magnetic field source but without indicating an exact direction or position. This illustrated case may arise, when a weak magnetic field is measured by only one or two magnetic field sensors, such that the direction vector cannot be calculated with sufficient accuracy or the position of the magnetic field source 42 cannot be displayed with sufficient accuracy on the display either due to the resolution of the display or because the direction vector cannot be calculated with sufficient accuracy.

Figure 4D Illustrates a case where the (X,Y) position of the position of the magnetic field source cannot be calculated. This is indicated by a red circle representing the position of the handheld scanning device but without giving any guidance for the user of where to search for a signal.

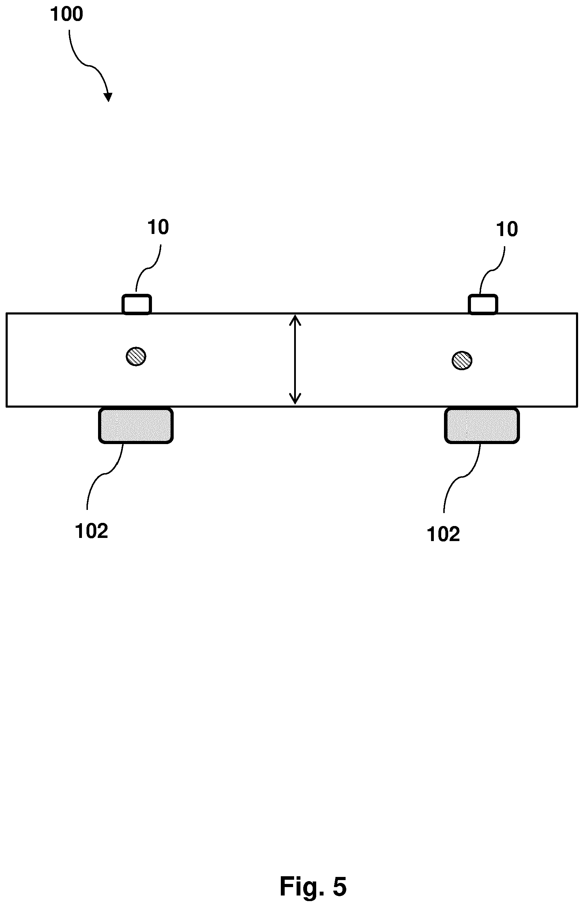

Figure 5 illustrates a use of one embodiment of the locating system 100 for detecting hidden steel elements e.g. reinforcements in building constructions. On the left-hand side is illustrated a situation where a steel element is in a wall in a position between the permanent magnet 102 and the locating device 10. On the right-hand side is illustrated a situation, where the steel element is in a wall but in a position just on the left-hand side of the locating device 10.

Here the strength of the measured magnetic field will be altered due to the shielding character of the steel element as this will dampen the magnetic field in the direction going from the magnet 102 to the device 10 via the steel element.

Thus, the hidden element may be detected by a reduction in the strength (amplitude) of the measured magnetic field compared to measurements conducted in other areas, where no hidden elements are present.

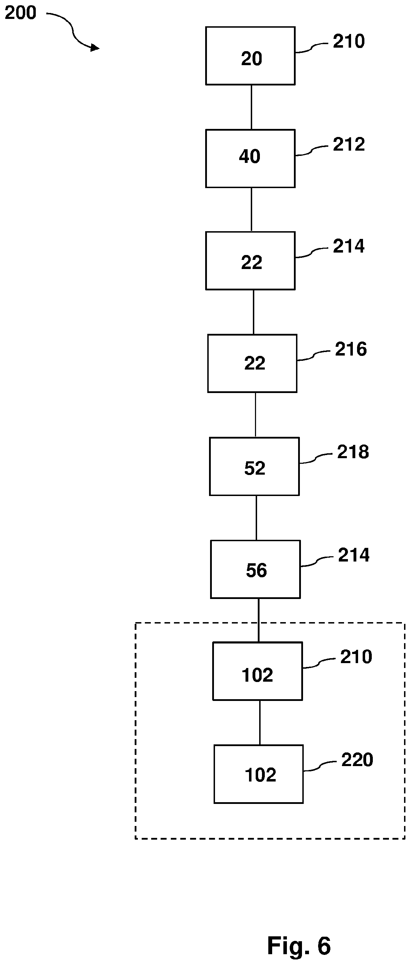

Figure 6 illustrates one embodiment of the method 200 of detecting hidden objects in building constructions.

The illustrated method comprises an act of providing 210 at least three magnetic field sensors 20. The field sensors are arranged in a fixed pattern such that the sensors span a single plane between them. In this disclosure also referred to as the (X,Y) plane. A reference point is defined relative to the magnetic field sensors, which can be used as a zero-point for the coordinate system used to locate the magnetic field source relative to the magnetic field sensors.

Furthermore, the illustrated method 200 comprises acts of detecting 212 the strength of the magnetic field 40 generated by the magnetic field source with each of the three magnetic field sensors 20 and outputting 214 sensor signals 22 indicating the strength of the detected magnetic field.

In the illustrated method, the sensor signals 22 is received 216 in a controller and one or more vector(s) 52 are generated 218. The vector 52 indicates the strength of the detected magnetic field and the direction towards a stronger part of the magnetic field. The vector 52 is generated as a function of the received sensor signals 22.

The indicated strength of the detected magnetic field and the indicated direction may be calculated values based on the received sensor signals 22, where the actual value of the strength is not necessarily given as an exact value but rather as a ratio between a maximum and a minimum value.

Furthermore, the illustrated method 200 comprises an act of outputting 214 one or more controller signals 56 comprising information of the one or more vectors 52. The outputted controller signals may be used for guiding a user to determining a position of the magnetic field source, which generates the detected magnetic field.

The position of the magnetic field source may be represented by X-, Y- and Z-coordinates relative to the defined reference point.

The illustrated method in figure 6 may comprise additional acts of providing 210 a permanent magnet 102 and of arranging 220 the permanent magnet in or on an installation object to be localized.

The permanent magnet may be arranged with the magnet pole arranged substantially perpendicular to the (X,Y) plane of the sensors, when the sensors are used in accordance with the method for detecting the installation object.

The installation object may comprise specific holding means for permanent magnet.

## Claims

1. A locating device (10) for detecting a position of hidden objects in building constructions such as wall and ceilings, said locating device (10) comprising
- at least three magnetic field sensors (20) arranged in an (X,Y) plane (30) in a fixed pattern with a reference point (24), each sensor (20) being configured for detecting a strength of a magnetic field (40) and outputting a sensor signal (22) indicating the strength of the detected magnetic field, and
- a controller (50) configured for receiving said sensor signals (22), and for generating one or more vectors (52) indicating the strength of the detected magnetic field and a direction towards a stronger part of the magnetic field, wherein said vector(s) (52) are generated as a function of the received sensor signals (22), said controller (50) being configured for outputting one or more controller signals (56) for said one or more vectors (52).
- a user interface (60) configured for receiving said controller signals (56) and for outputting direction guidance based on the received controller signals (56) for guiding a user to determining a position (42) of a magnetic field source (44) generating the detected magnetic field,
wherein the three magnetic field sensors (20) are arranged substantially perpendicular to the (X,Y) plane for detecting the strength of the magnetic field perpendicular to the (X,Y) plane, and wherein said position (42) being represented by X-, Y- and Z-coordinates relative to said reference point (24).

2. The locating device (10) according to claim 1, wherein at least the three of the magnetic field sensors (20) are Hall sensors.

3. The locating device (10) according to claim 1 or 2 comprised in a handheld scanning device (12) configured to be moved along a construction surface (80) substantially parallel to the (X,Y) plane of at least three of the magnetic field sensors (22).

4. The locating device (10) according to claim 3, wherein the handheld scanning device (12) comprises a scanner surface (14) arranged substantially parallel to the (X,Y) plane of the three magnetic field sensors (22) and wherein said scanner surface (14) is adapted to be moved along the construction surface (80).

5. The locating device (10) according to any one or more of the preceding claims comprising a marking device (90) configured to be moveable in at least one direction being perpendicular to the (X,Y) plane of at least three of the magnetic field sensors (22) for providing a mark on the construction surface (80) for indicating the (X,Y) position of the magnetic field source (70).

6. The locating device (10) according to any one or more of the preceding claims adapted to detect magnetic field sources at a depth of up to 70mm, preferably 100mm or even 1500mm with a precision of 0.2mm or lower.

7. A locating system (100) comprising the locating device (10) according to any one or more of the preceding claims, and a permanent magnet (102) adapted to be arranged in or on an installation object to be located.

8. The locating system (100) according to claim 7 comprising a holder (104) adapted for holding the permanent magnet (102).

9. Use of the locating device (10) according to any one or more of claims 1-6 or the locating system (100) according to anyone of claims 7 or 8 for detecting existing steel elements located inside building constructions.

10. A method (200) of detecting a position of hidden objects in building constructions such as wall and ceilings, said method comprising acts of:
- providing (210) at least three magnetic field sensors (20) arranged in a fixed pattern in an (X,Y) plane with a reference point (24),
- detecting (212) a strength of a magnetic field (40) with each of the three sensors,
- outputting (214) sensor signals (22) indicating the strength (24) of the detected magnetic field,
- receiving (216), in a controller, the sensor signals (22),
- generating (218) one or more vectors (52) indicating the strength of the detected magnetic field and a direction towards a stronger part of the magnetic field, wherein said one or more vectors (52) are generated as a function of the received sensor signals (22), and
- outputting (214) one or more controller signals (56) for said one or more vectors (52) for guiding a user to determining a position (42) of a magnetic field source (44) generating the detected magnetic field, said position (42) being represented by X-, Y- and Z-coordinates relative to said reference point (24),
wherein the three magnetic field sensors (20) are arranged substantially perpendicular to the (X,Y) plane for detecting the strength of the magnetic field perpendicular to the (X,Y) plane.

11. The method (200) according to claim 10 comprising acts of providing (210) a permanent magnet (102) and arranging (220) said permanent magnet in or on an installation object to be localized, wherein said permanent magnet is arranged with the magnet pole substantially perpendicular to the (X,Y) plane of the sensors when in use.
